# EUROPEAN PATENT APPLICATION

(11) **EP 2 408 214 A2**
(43) Date of publication of application: **18.01.2012**
(21) Application number: 11173009.9
(22) Date of filing: 07.07.2011
(51) Int. Cl.: H04N 13/00

(54) **Playback apparatus, playback method, and program**

(30) Priority: 16.07.2010 JP 2010161257
(71) Applicant: Sony Corporation, Tokyo 108-0075 (JP)
(72) Inventor: Takase, Tsunemitsu, Tokyo, 108-0075 (JP); Tamura, Toshitaka, Tokyo, 108-0075 (JP); Azuma, Takafumi, Tokyo, 108-0075 (JP); Ikeda, Yasushi, Tokyo, 108-0075 (JP); Fujii, So, Tokyo, 108-0075 (JP)
(74) Representative: Beder, Jens

(57) **Abstract**

A playback apparatus includes the following elements. A playback unit play backs 3D content recorded on a content recording medium. An OSD screen generator generates an OSD screen which is displayed by being superposed on a 3D image of the 3D content. An image processor generates a 3D image by changing an amount of parallax of the 3D image and combines the generated 3D image with the OSD screen. When the OSD screen is to be displayed while the 3D content is being played back, the image processor generates a 3D image by gradually decreasing a pop-out amount of the 3D image and combines the generated 3D image with the OSD screen. When the displayed OSD screen is to be erased, the image processor generates a 3D image by gradually increasing the decreased pop-out amount to the original pop-out amount, and combines the generated 3D image with the OSD screen.

## Description

### BACKGROUND

The present disclosure relates to playback apparatuses, playback methods, and programs, and more particularly, to a playback apparatus, a playback method, and a program that allow users to view on-screen display (OSD) screens in three-dimensional (3D) display without making the user feel that the display is unnatural.

Recently, 3D movies that allow viewers to perceive pictures three-dimensionally have become a topic of conversation, and 3D television receivers have also been released. In this manner, viewing of 3D pictures has become more and more popular.

In order to solve the problems unique to 3D content, various techniques have been proposed. As an example of such techniques, Japanese Unexamined Patent Application Publication No. 2004-328566 discloses the following technique. When switching content display from 2D content to 3D content, 2D display can be smoothly switched to 3D display without making a user feel that the display is unnatural by gradually increasing the amount of parallax.

### SUMMARY

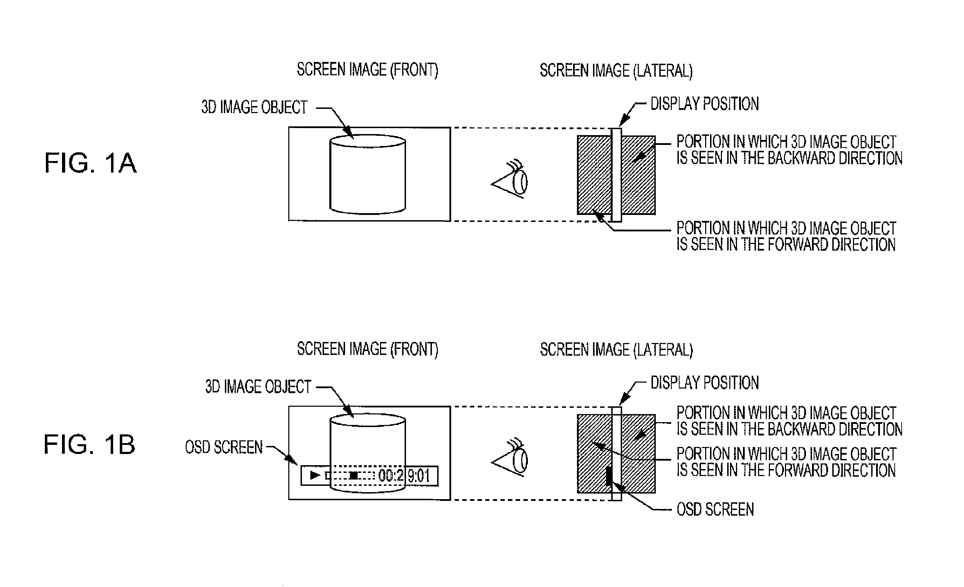

One of the problems unique to 3D content is a problem that occurs when an OSD screen, such as that shown in Fig. 1B, is displayed.

Fig. 1A conceptually illustrates a screen as viewed from the front side and from the right lateral side of the screen when a 3D content image (hereinafter may be simply referred to as a "3D image") is displayed on the screen. An object in the 3D image is perceived by a user such that it has a depth in the forward direction (toward the user) and a depth in the backward direction (away from the user), as indicated by the hatched portions in Fig. 1A.

In this case, when an OSD screen which shows a playback position and a playback time of the 3D content, such as that shown in Fig. 1B, is displayed, it appears to the user that it is displayed at a display position on the screen. Accordingly, the object in the 3D image and the OSD screen exhibit an unnatural positional relationship at the overlapping portions thereof. That is, the OSD screen is displayed such that it is buried in the 3D image object, as shown in the screen as viewed from the right lateral side of the screen shown in Fig. 1B, thereby making the OSD screen partially invisible.

Accordingly, it is desirable for a user to view an OSD screen in 3D display without making the user feel that the display is unnatural.

A playback apparatus according to an embodiment of the present disclosure includes: a playback unit configured to play back 3D content recorded on a content recording medium; an OSD screen generator configured to generate an OSD screen which is displayed by being superposed on a 3D image of the 3D content; and an image processor configured to generate a 3D image by changing an amount of parallax of the 3D image of the 3D content read from the content recording medium and to combine the generated 3D image having the changed amount of parallax with the OSD screen. When the OSD screen is to be displayed while the 3D content is being played back, the image processor generates a 3D image by gradually decreasing a pop-out amount of the 3D image of the 3D content read from the content recording medium and combines the generated 3D image with the OSD screen, and when the displayed OSD screen is to be erased, the image processor generates a 3D image by gradually increasing the decreased pop-out amount to the pop-out amount of the 3D image of the 3D content read from the content recording medium, and combines the generated 3D image with the OSD screen.

A playback method according to an embodiment of the present disclosure includes: when an OSD screen is to be displayed by a playback apparatus for playing back 3D content recorded on a content recording medium, generating the OSD screen by the use of an OSD screen generator of the playback apparatus; generating a 3D image by gradually decreasing a pop-out amount of a 3D image of the 3D content read from the content recording medium and combining the generated 3D image with the OSD screen by the use of an image processor of the playback apparatus; and when the OSD screen is to be erased, generating a 3D image by gradually increasing the decreased pop-out amount to the pop-out amount of the 3D image of the 3D content read from the content recording medium and combining the generated 3D image with the OSD screen.

A program according to an embodiment of the present disclosure allows a computer to function as: playback control means for controlling a playback operation for playing back 3D content recorded on a content recording medium; OSD screen generating means for generating an OSD screen that is displayed by being superposed on a 3D image of the 3D content; and image processing means for generating a 3D image by changing an amount of parallax of the 3D image of the 3D content read from the content recording medium and for combining the generated 3D image with the OSD screen. When the OSD screen is to be displayed while the 3D content is being played back, the image processing means generates a 3D image by gradually decreasing a pop-out amount of the 3D image of the 3D content read from the content recording medium and combines the generated 3D image with the OSD screen, and when the displayed OSD screen is to be erased, the image processing means generates a 3D image by gradually increasing the decreased pop-out amount to the pop-out amount of the 3D image of the 3D content read from the content recording medium, and combines the generated 3D image with the OSD screen.

According to an embodiment of the present disclosure, when an OSD screen is to be displayed while 3D content recorded on a content recording medium is being played back, an OSD screen is generated, and a 3D image is generated by gradually decreasing the pop-out amount of the 3D image of the 3D content read from the content recording medium. The generated 3D content is then combined with the generated OSD screen. When the OSD screen is to be erased, a 3D image is generated by gradually increasing the decreased pop-out amount to the original pop-out amount, and is then combined with the OSD screen.

The playback apparatus may be an independent apparatus or an internal block forming one apparatus.

According to an embodiment of the present disclosure, it is possible for a user to view an OSD screen in 3D display without making the user feel that the display is unnatural.

### BRIEF DESCRIPTION OF THE DRAWINGS

Figs. 1A and 1B are drawings illustrating problems unique to the related art;
Fig. 2 is a block diagram illustrating an example of the configuration of a playback apparatus according to an embodiment of the present disclosure;
Fig. 3 is a flowchart illustrating OSD screen display control processing performed by the playback apparatus shown in Fig. 2;
Figs. 4A and 4B illustrate the content of data recorded as an index file;
Fig. 5 is a flowchart illustrating OSD image display processing;
Fig. 6 conceptually illustrates screens displayed while OSD screen display processing is being performed;
Fig. 7 is a flowchart illustrating OSD screen erasing processing;
Fig. 8 conceptually illustrates screens displayed while OSD screen erasing processing is being performed;
Fig. 9 is a flowchart illustrating display control processing on 3D images while a trick play operation is being performed; and
Fig. 10 is a block diagram illustrating an example of the configuration of a computer according to an embodiment of the present disclosure.

### DETAILED DESCRIPTION OF EMBODIMENTS

### Example of Configuration of Playback Apparatus

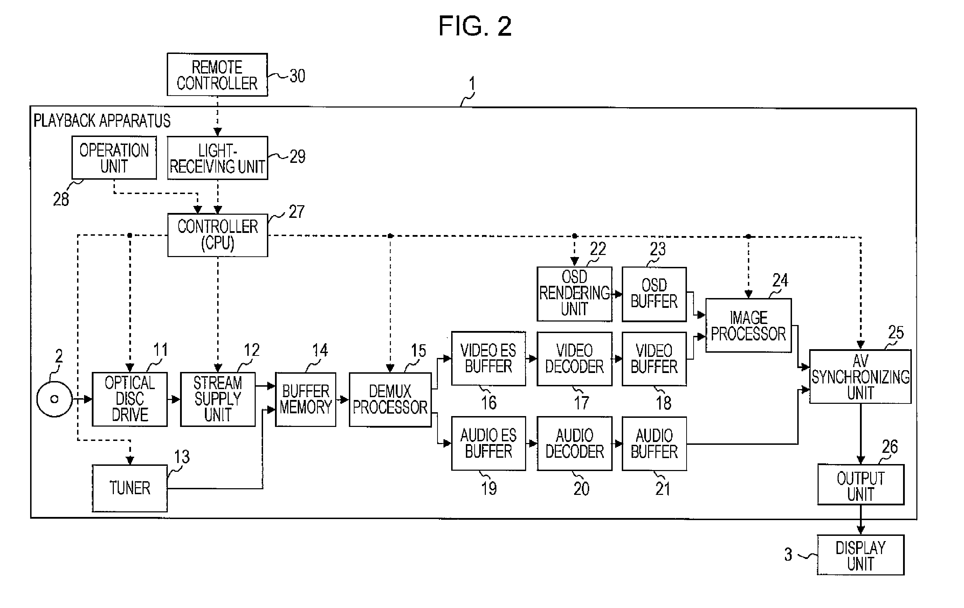

Fig. 2 illustrates an example of the configuration of a playback apparatus according to an embodiment of the present disclosure.

A playback apparatus 1 is configured to play back 3D content recorded on an optical disc 2, which serves as a content recording medium, and to display 3D content images on an external display unit 3. Precisely speaking, playback of content recorded on the optical disc 2 refers to playing back data of the content (content data). In this specification, however, playback of data of the content is simply referred to as "playback of content". If 2D content is recorded on the optical disc 2, the playback apparatus 1 plays back the 2D content. In 2D content, an image viewed with a right eye and an image viewed with a left eye are the same. In contrast, in 3D content, an image viewed with a right eye and an image viewed with a left eye are different, and with the provision of parallax between a right-eye image and a left-eye image, 3D content images are perceived three-dimensionally. In Fig. 2, the solid lines indicate the flow of content data, and the broken lines indicate the flow of control signals.

In this embodiment, the optical disc 2 played back by the playback apparatus 1 is, for example, a Blu-ray (registered) Disc Read Only Memory (BD-ROM). The optical disc 2 may be another type of optical disc other than a BD-ROM, such as a Digital Versatile Disc (DVD) or a Blu-ray Disc. Alternatively, the playback apparatus 1 may play back 3D content recorded on another type of medium, such as a semiconductor memory, for example, a flash memory, or a hard disk. That is, the type of recording medium which records 3D content thereon is not particularly restricted.

An optical disc drive 11 drives the optical disc 2 under the control of a controller 27. A stream supply unit 12 reads a 3D-content audio-visual (AV) stream, which serves as a recording signal recorded on the optical disc 2 driven by the optical disc drive 11, and supplies the read AV stream to a buffer memory 14.

A tuner 13 receives, via an antenna (not shown), broadcast waves in a frequency band of a predetermined channel which is determined under the control of the controller 27, and supplies a 3D-content AV stream obtained from the broadcast waves to a buffer memory 14. The buffer memory 14 stores the 3D-content AV stream for a predetermined period, and then supplies the AV stream to a demultiplexer (demux) processor 15.

The demux processor 15 extracts packets of data, such as video data, audio data, and subtitle data, on the basis of packet identifiers (PIDs) of the AV stream supplied from the buffer memory 14. The PID is an ID unique to every type of data forming a packet, and is added to a packet.

The demux processor 15 supplies the extracted video data (video elementary stream (ES)) to a video ES buffer 16, and supplies the extracted audio data (audio ES) to an audio ES buffer 19.

The video ES buffer 16 stores the video data supplied from the demux processor 15 for a predetermined period, and then supplies the video data to a video decoder 17. The video decoder 17 decodes video data which has been encoded by using a predetermined encoding method, such as Moving Picture Experts Group phase 2 (MPEG-2), MPEG-4, or Advanced Video Coding (AVC), so as to generate image data of a right-eye image (hereinafter referred to as an "R image") and image data of a left-eye image (hereinafter referred to as an "L image"). A video buffer 18 stores the image data of the L image and the image data of the R image decoded from the video data for a predetermined period, and then supplies the image data to an image processor 24.

In order to reduce the amount of 3D content image data, the 3D content image data has been encoded and compressed by using, for example, H.264 AVC/Multi-view Video Coding (MVC) and is recorded on the recording medium 2.

In H.264 AVC/MVC, video streams referred to as "base view video" and video streams referred to as "dependent view video" are defined. Hereinafter, H.264 AVC/MVC may be simply referred to as "MVC".

According to MVC, encoding is performed by using, not only prediction between images in the time domain, but also by using prediction between streams (views).

More specifically, in MVC, prediction encoding using another stream as a reference image is not performed on base view video, but on the other hand, prediction encoding using base view video as a reference image is performed on dependent view video. Accordingly, 3D content image data is encoded by using base view video as an L image and by using dependent view video as an R image. In this case, since prediction encoding is performed on the R image on the basis of the L image, the data amount of a dependent view video stream can be made smaller than that of a base view video stream.

Since encoding has been performed by using H.264/AVC, prediction in the time domain has been performed on base view video, and also, prediction in the time domain, as well as prediction between views, has been performed on dependent view video. In order to decode dependent view video, it is necessary to finish decoding the corresponding base view video which has been used as a reference image during encoding.

In the 3D content image data, data of the R image and data of the L image may be recorded on the optical disc 2 as different MPEG-Transport Streams (TSs), or as a single MPEG-TS.

The audio ES buffer 19 stores audio data supplied from the demux processor 15 for a predetermined period, and then supplies the audio data to an audio decoder 20. The audio decoder 20 decodes the audio data which has been encoded by using a predetermined encoding method, such as an MPEG, so as to generate sound data. An audio buffer 21 stores the decoded sound data for a predetermined period, and then supplies the sound data to an AV synchronizing unit 25.

Under the control of the controller 27, an OSD rendering unit 22 generates an OSD screen, which is to be displayed by being superposed on a 3D image, and supplies the OSD screen to an OSD buffer 23. For example, the OSD rendering unit 22 generates an OSD screen that shows a playback time and a current playback position within the entire 3D content. The OSD buffer 23 stores the image data of the OSD screen generated by the OSD rendering unit 22 for a predetermined period, and then supplies the OSD image data to the image processor 24.

Under the control of the controller 27, the image processor 24 obtains the image data stored in the video buffer 18 and the image data stored in the OSD buffer 23, and performs predetermined processing on the image data if necessary. The image processor 24 then supplies the image data to the AV synchronizing unit 25. Processing which may be performed by the image processor 24 includes synthesizing processing for combining the 3D content image with the OSD screen and parallax changing processing for changing the amount of parallax between the R image and the L image to generate a 3D image.

The AV synchronizing unit 25 synchronizes the image data supplied from the image processor 24 with the sound data supplied from the audio buffer 21 and outputs the synchronized data to an output unit 26 in accordance with a presentation time stamp (PTS). PTS is time information for playing back 3D data.

The output unit 26 contains a digital-to-analog (D/A) converter, and outputs the synchronized data including the image data and the sound data to the display unit 3 as an analog or digital AV signal. The output unit 26 includes output terminals, such as a High-Definition Multimedia Interface (HDMI) output terminal for outputting an AV signal as an HDMI signal and an output terminal for outputting an AV signal as a component signal.

The display unit 3, which is connected to the output unit 26, is a television receiver including a plasma display panel (PDP) display or a liquid crystal display. In playback of 3D content, R images and L images are alternately displayed on the display unit 3. A viewer (user) wears 3D glasses to view 3D content images. 3D glasses have, for example, a function to alternately open and close a right-eye shutter and a left-eye shutter in synchronization with display of an R image and an L image, respectively. A parallax is provided between an R image and an L image, and the viewer observes the R image with the right eye and the L image with the left eye, thereby making it possible to three-dimensionally perceive an image displayed on the display unit 3.

In accordance with a control program recorded in a memory (not shown), the controller 27 controls the playback operation to be performed by the playback apparatus 1 in response to operation instructions output from an operation unit 28 or a light-receiving unit 29, thereby controlling playback of images to be displayed on the display unit 3.

The operation unit 28 includes, for example, a playback button for starting playback and a stop button for stopping playback. The operation unit 28 receives an operation performed by a user and supplies an operation signal corresponding to the received operation to the controller 27. The light-receiving unit 29 receives, through, for example, infrared wireless communication, an operation signal supplied from a remote controller 30, which is an attachment for the playback apparatus 1, and supplies the received operation signal to the controller 27.

The remote controller 30 transmits through, for example, infrared wireless communication, an operation signal corresponding to an operation button operated by the user to the light-receiving unit 29 that the playback apparatus 1 is provided with.

The remote controller 30 includes operation buttons for playing back 3D content, such as a playback button, a stop button, a screen display button, a fast-forward (FF) button, a fast-rewind (FR) button, a Next button, a Preview button, a Flash+ button, and a Flash- button.

When the screen display button is pressed (depressed) once, an OSD screen that shows a playback time and a current playback position within the entire 3D content is displayed. When the screen display button is pressed twice, the displayed OSD screen is erased. That is, the screen display button is a toggle button with which the display state of an OSD display screen can be switched through toggle operations.

All of the FF button, FR button, Next button, Preview button, Flash+ button, and Flash- button are buttons that are used to perform jumping operations for displaying an image which is positioned prior to or subsequent to an image positioned at a current position by a certain number of images. The FF button and FR button are buttons that sequentially change playback positions (playback images) while they are being operated (depressed). In contrast, the Next button, Preview button, Flash+ button, and Flash-button are buttons that specify a predetermined playback position (time) of playback content and move the content to the specified position.

The playback apparatus 1 is configured as described above.

The playback apparatus 1 shown in Fig. 2 performs the following display control. When displaying an OSD screen while 3D content is being played back, it is possible to prevent the OSD screen from being made partially invisible because of popping-out of a 3D image in the forward direction of the screen.

### OSD Screen Display Control Processing

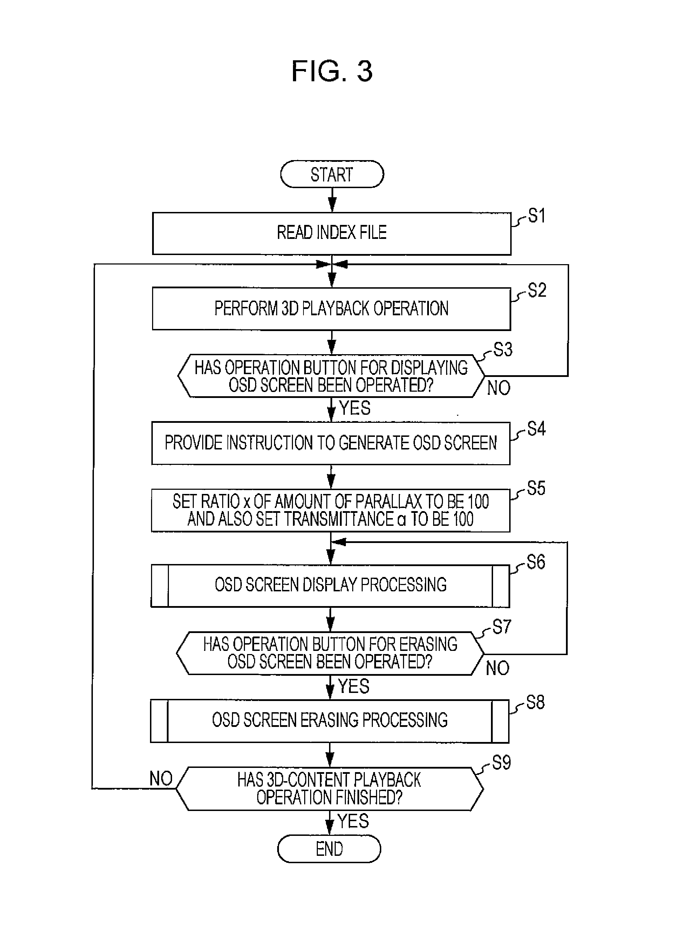

A description is now given below, with reference to the flowchart of Fig. 3, of OSD screen display control processing performed by the playback apparatus 1 while 3D content is being played back. This processing is started when a BD-ROM, which is used as the optical disc 2, is set in the optical disc drive 11.

In step S1, the controller 27 of the playback apparatus 1 reads an index file recorded on the BD-ROM.

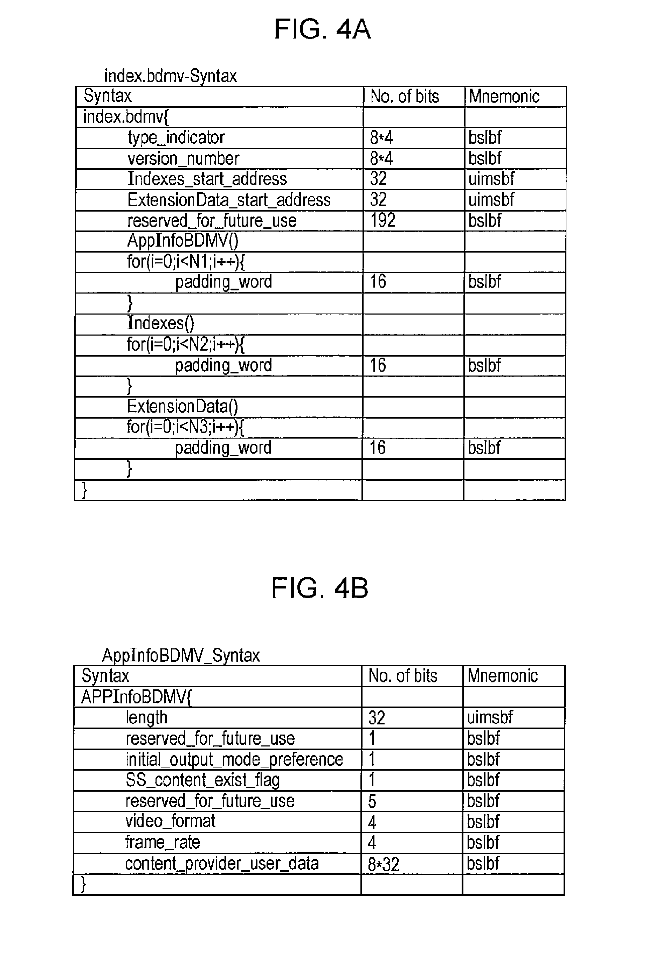

Figs. 4A and 4B illustrate the content of data recorded as the index file.

In the BD-ROM, under a root directory, a Blu-ray Disk Movie (BDMV) directory is arranged. An index file (index.bdmv file) is arranged in the BDMV directory.

Fig. 4A illustrates the data structure of the index file.

In the index file, AppInfoBDMV() in which information concerning the content is recorded is arranged. The data structure of AppInfoBDMV() is shown in Fig. 4B.

In AppInfoBDMV(), a flag named SS_content_exist_flag is described. If this flag indicates 1, the content recorded on the BD-ROM is 3D content. By checking the SS_content_exist_flag flag, the controller 27 identifies that the content recorded on the optical disc 2 is 3D content. In AppInfoBDMV(), other types of information, such as information concerning the video format (video_format) and information concerning the frame rate (frame_rate) are recorded.

Referring back to Fig. 3, in step S2, the playback apparatus 1 performs a 3D playback operation.

The flow of content data in a normal 3D playback operation is briefly described below.

An AV stream read from the optical disc 2 is supplied to the demux processor 15 via the buffer memory 14. The AV stream is divided into a video ES and an audio ES by the demux processor 15. The video ES is supplied to the video decoder 17 via the video ES buffer 16, while the audio ES is supplied to the audio decoder 20 via the audio ES buffer 19. In the video decoder 17, the video ES is decoded into image data of an R image and image data of an L image. In the audio decoder 20, the audio ES is decoded into sound data. The image data of the R image and the image data of the L image and the sound data are output by the AV synchronizing unit 25 at a predetermined time in accordance with PTS. The R image and the L image are displayed on the display unit 3 and sound is output at the same time.

In step S3, the controller 27 determines whether the operation button used for operating an OSD screen, i.e., the screen display button, has been operated. If an operation signal representing the depression of the screen display button is supplied from the remote controller 30 via the light-receiving unit 29, the controller 27 determines that the operation button for displaying the OSD screen has been operated. If it is determined in step S3 that the operation button for displaying an OSD screen has not been operated, the process returns to step S2. Then, the 3D content playback operation continues.

If it is determined in step S3 that the operation button for displaying an OSD screen has been operated, the process proceeds to step S4. In step S4, the controller 27 instructs the OSD rendering unit 22 to generate an OSD screen. In response to this instruction, the OSD rendering unit 22 obtains the current playback position and playback time of the 3D content from the controller 27 and generates an OSD screen corresponding to the playback position and playback time. The OSD rendering unit 22 then supplies the image data of the OSD screen to the OSD buffer 23. In step S4, the controller 27 also instructs the image processor 24 to display the OSD screen.

In step S5, in response to an instruction to display the OSD screen from the controller 27, the image processor 24 sets the ratio x (%) of the amount of parallax to be 100 as the initial value. In this embodiment, the amount of parallax in the pop-out (forward) direction of an original 3D image may be changed by using the original amount of parallax as a reference value. The ratio x of the amount of parallax is the ratio of the changed amount of parallax to the original amount of parallax. For example, if x=50, the amount of parallax in the pop-out direction of a new 3D image is half the amount of parallax of the original 3D image. It is noted that the amount of parallax in the backward direction is not changed.

In step S5, the image processor 24 sets the transmittance α (%) of the OSD screen to be 100 as the initial value. The transmittance α takes a value from 0 to 100, and as the value increases, a 3D image is visible through the OSD screen to a greater extent and is more clearly seen. When the transmittance α is 0, the OSD screen is completely in the non-transparent state, and a portion of the 3D image which overlaps the OSD screen is invisible.

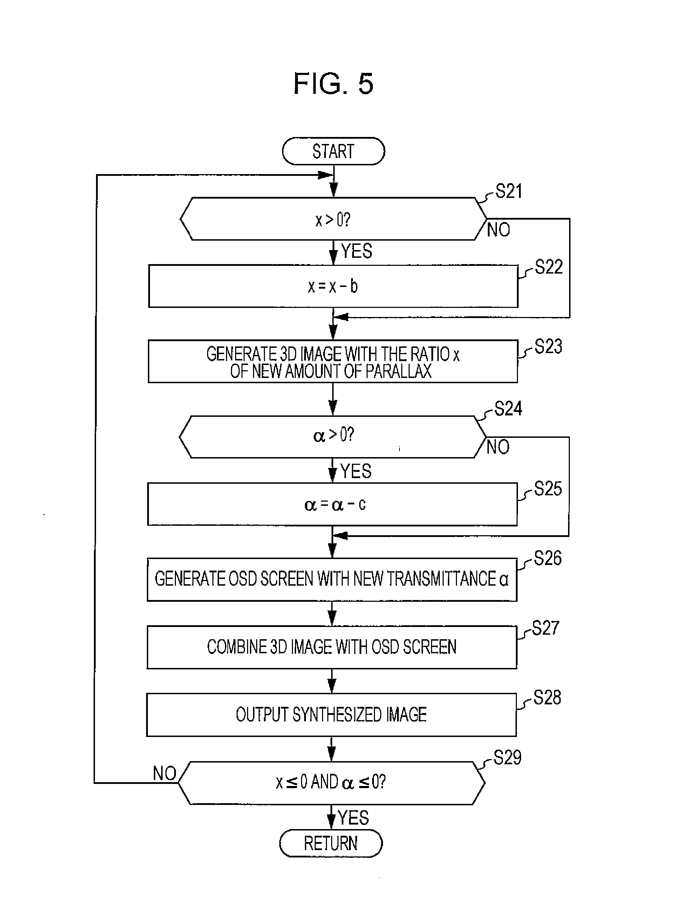

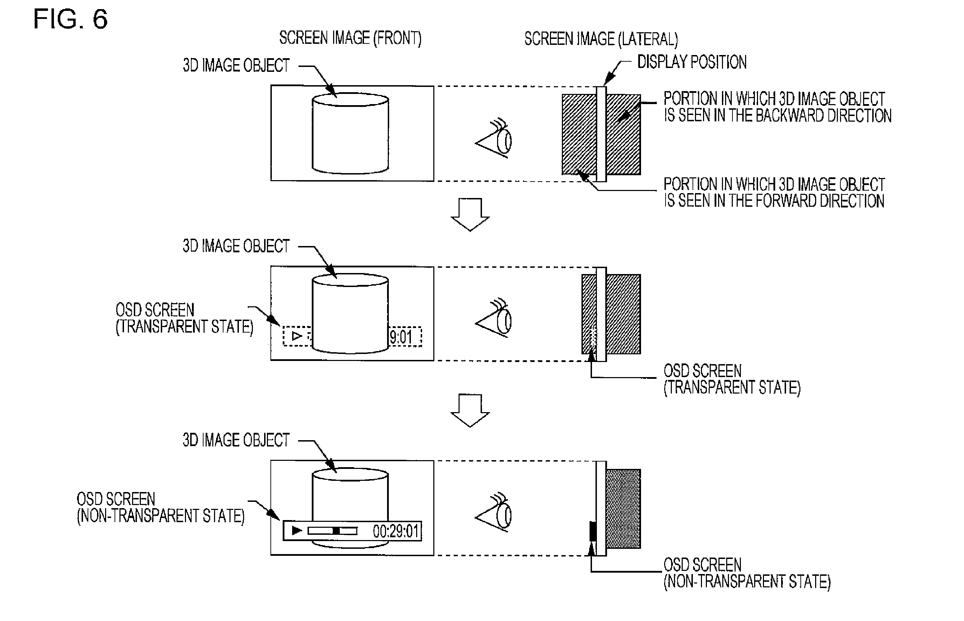

In step S6, the image processor 24 performs OSD screen display processing on a 3D image of the 3D content, and more specifically, the image processor 24 adjusts the transmittance α of the OSD screen so as to gradually display the OSD screen. Details of this processing are described later with reference to Figs. 5 and 6.

In step S7, the controller 27 determines whether the operation button used for erasing the OSD screen has been operated. If the result of step S7 is NO, the process returns to step S6. Step S6 is repeated until the operation button for erasing the OSD screen is operated.

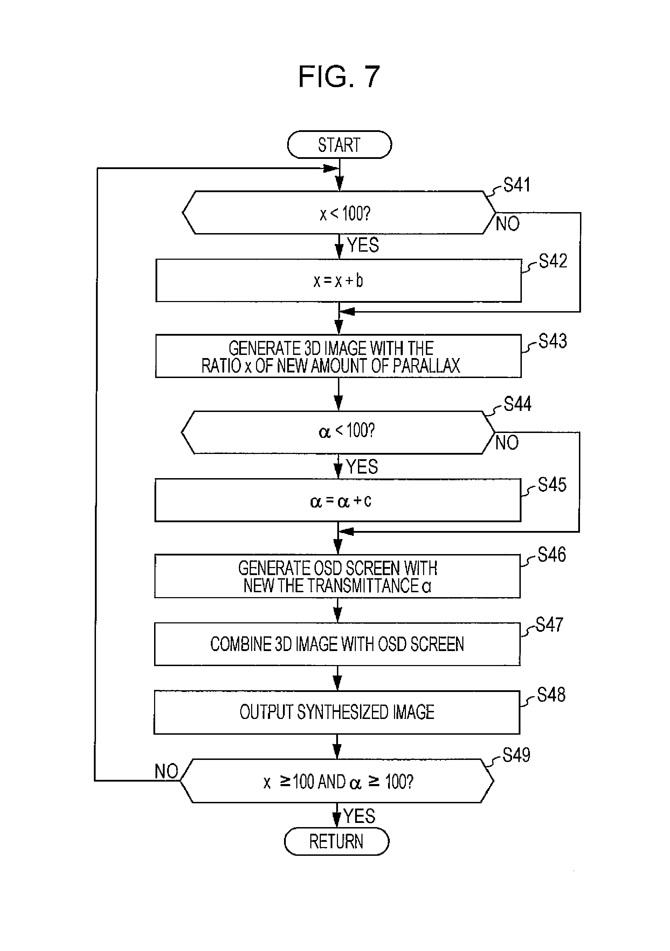

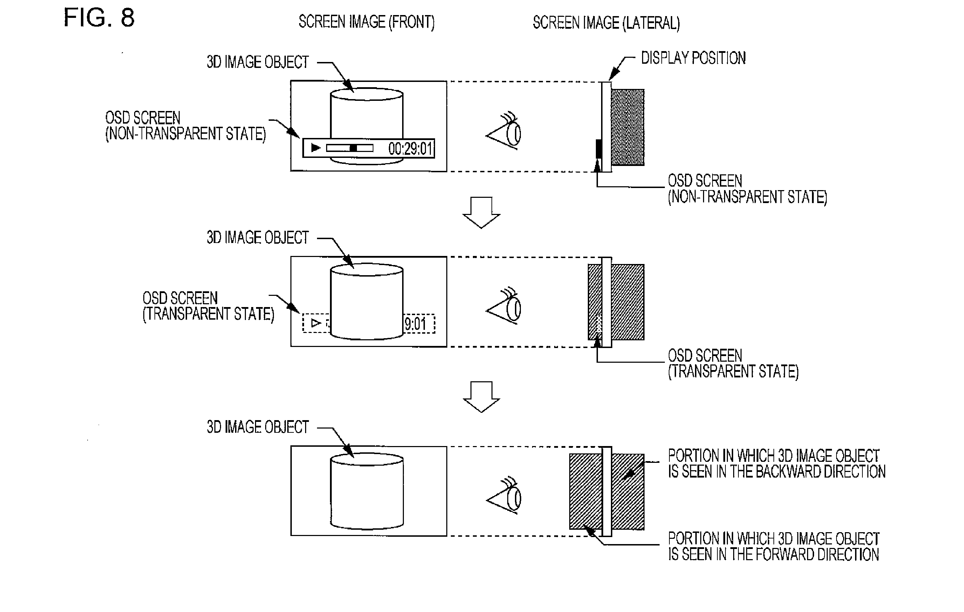

If it is determined in step S7 that the operation button for erasing the OSD screen has been operated, the process proceeds to step S8. In step S8, the controller 27 instructs the image processor 24 to erase the OSD screen. In response to an instruction to erase the OSD screen from the controller 27, the image processor 24 performs OSD screen erasing processing on the 3D image of the 3D content, and more specifically, the image processor 24 adjusts the transmittance α of the OSD screen so as to gradually erase the OSD screen. Details of this processing are described later with reference to Figs. 7 and 8.

In step S9, the controller 27 determines whether the playback operation of the 3D content has finished, i.e., whether all the items of 3D content have been read out from the BD-ROM. If the result of step S9 is no, the process returns to step S2, and the subsequent steps are repeated. If the result of step S9 is YES, the processing shown in Fig. 3 is completed.

### OSD Screen Display Processing

Fig. 5 is a flowchart illustrating the OSD screen display processing in step S6 of Fig. 3.

In the OSD screen display processing, in step S21, the image processor 24 determines whether the ratio x of the amount of parallax is greater than 0. If it is determined in step S21 that the ratio x of the amount of parallax is 0 or smaller, step S22 is skipped.

If it is determined in step S21 that the ratio x of the amount of parallax is greater than 0, the process proceeds to step S22. In step S22, the image processor 24 subtracts an increase or a decrease "b" in the ratio x from the current ratio x, and sets the resulting value to be the ratio x of a new amount of parallax.

In step S23, the image processor 24 obtains the original 3D image from the video buffer 18 and generates a 3D image with the ratio x of the new amount of parallax.

In step S24, the image processor 24 determines whether the transmittance α of the OSD screen is greater than 0. If it is determined in step S24 that the transmittance α of the OSD screen is 0 or smaller, step S25 is skipped.

If it is determined in step S24 that the transmittance α of the OSD screen is greater than 0, the process proceeds to step S25. In step S25, the image processor 24 subtracts an increase or a decrease "c" in the transmittance α from the current transmittance α, and sets the resulting value to be a new transmittance α.

In step S26, the image processor 24 obtains image data of the OSD screen stored in the OSD buffer 23 and generates an OSD screen with the new transmittance **α.**

In step S27, the image processor 24 combines the 3D image having the ratio x of the changed amount of parallax with the OSD screen having the changed transmittance α, and supplies image data of the synthesized image to the AV synchronizing unit 25.

In step S28, the AV synchronizing unit 25 synchronizes the image data of the synthesized image supplied from the image processor 24 with the sound data supplied from the audio buffer 21 and outputs the synchronized data in accordance with PTS. The image data output from the AV synchronizing unit 25 is supplied to the display unit 3 via the output unit 26. As a result, the synthesized image obtained by combining the 3D image having the ratio x of the amount of parallax in the pop-out direction with the OSD screen having the transmittance α is displayed on the display unit 3.

In step S29, the image processor 24 determines whether the ratio x of the amount of parallax is 0 or smaller and the transmittance α is 0 or smaller.

If the result of step S29 is NO, the process returns to step S21, and the subsequent steps are repeated.

On the other hand, if the result of step S29 is YES, the OSD screen display processing is completed, and the process returns to the OSD screen display control processing shown in Fig. 3.

### Screen During Execution of OSD Screen Display Processing

Fig. 6 conceptually illustrates screens displayed while the OSD screen display processing is being performed.

The top section of Fig. 6 conceptually illustrates a screen displayed immediately before an OSD screen is displayed.

The middle section of Fig. 6 conceptually illustrates a screen displayed while the OSD screen display processing shown in Fig. 5 is being performed, i.e., when the transmittance **α** and the ratio x of the amount of parallax are gradually decreased from the original values, which are greater than 0 and smaller than 100, by the amount of increases or decreases "c" and "b", respectively.

In this state, the amount of parallax of the 3D image in the pop-out direction is smaller than that of the original 3D image while the amount of parallax in the backward direction is being maintained. Accordingly, an amount by which an object in the 3D image pops out (pop-out amount of the object) perceived by the user is gradually decreased. The transmittance of the OSD screen is also gradually decreased. Accordingly, the OSD screen gradually appears on the screen.

The bottom section of Fig. 6 conceptually illustrates a screen displayed when the OSD image display processing shown in Fig. 5 has finished, i.e., when the transmittance α is 0 and the ratio x of the amount of parallax is 0.

In this state, the amount of parallax in the pop-out direction is 0 for all the pixels forming the 3D image, and thus, the pop-out amount of the object perceived by the user is 0. The transmittance **α** of the OSD screen is also 0, and the OSD screen is completely in the non-transparent state. Accordingly, the OSD screen is displayed in front of the 3D image. This enables the user to view the OSD screen and the object with a natural positional relationship without causing the OSD screen and the object to interfere with each other. That is, it is possible to prevent the OSD screen from being made partially invisible because of popping out of the 3D image in the forward direction.

### OSD Screen Erasing Processing

Fig. 7 is a flowchart illustrating the OSD screen erasing processing in step S8 of Fig. 3.

In the OSD screen erasing processing, in step S41, the image processor 24 determines whether the ratio x of the amount of parallax is smaller than 100. If it is determined in step S21 that the ratio x of the amount of parallax is 100 or greater, step S42 is skipped.

If it is determined in step S41 that the ratio x of the amount of parallax is smaller than 100, the process proceeds to step S42. In step S42, the image processor 24 adds an increase or decrease "b" in the ratio to the ratio x of the current amount of parallax, and sets the resulting value to be the ratio x of a new amount of parallax.

In step S43, the image processor 24 obtains the original 3D image from the video buffer 18 and generates a 3D image with the ratio x of the new amount of parallax.

In step S44, the image processor 24 determines whether the transmittance α of the OSD screen is smaller than 100. If it is determined in step S44 that the transmittance **α** is 100 or greater, step S45 is skipped.

If it is determined in step S44 that the transmittance α of the OSD screen is smaller than 100, the process proceeds to step S45. In step S45, the image processor 24 adds an increase or decrease "c" in the transmittance to the current transmittance α, and sets the resulting value to be a new transmittance α.

In step S46, the image processor 24 obtains image data of the OSD screen stored in the OSD buffer 23 and generates an OSD screen with the new transmittance α.

In step S47, the image processor 24 combines the 3D image having the ratio x of the changed amount of parallax with the OSD screen having the transmittance α, and supplies the image data of the synthesized image to the AV synchronizing unit 25.

In step S48, the AV synchronizing unit 25 synchronizes the image data of the synthesized image supplied from the image processor 24 with the sound data supplied from the audio buffer 21 and outputs the synchronized data in accordance with PTS. The image data output from the AV synchronizing unit 25 is supplied to the display unit 3 via the output unit 26. As a result, the synthesized image obtained by combining the 3D image having the ratio x of the amount of parallax in the pop-out direction with the OSD screen having the transmittance **α** is displayed on the display unit 3.

In step S49, the image processor 24 determines whether the ratio x of the amount of parallax is 100 or greater and the transmittance α is 100 or greater.

If the result of step S49 is NO, the process returns to step S41, and the subsequent steps are repeated.

On the other hand, if the result of step S49 is YES, the OSD screen erasing processing is completed, and the process returns to the OSD screen display control processing shown in Fig. 3.

### Screen During Execution of OSD Screen Erasing Processing

Fig. 8 schematically illustrates screens displayed while the OSD screen erasing processing is being performed.

The top section of Fig. 8 illustrates a screen displayed immediately before the OSD screen erasing processing is started. That is, the screen shown at the top section of Fig. 8 is the same as that at the bottom section of Fig. 6.

The middle section of Fig. 8 conceptually illustrates a screen displayed while the OSD screen erasing processing shown in Fig. 7 is being performed, i.e., when the transmittance α and the ratio x of the amount of parallax are gradually increased from the values, which are greater than 0 and smaller than 100, by the amount of increases or decreases "c" and "b", respectively.

In this state, the amount of parallax in the pop-out direction is gradually increased to that of the original 3D image while the amount of parallax in the backward direction is being maintained. Accordingly, the pop-out amount of the object perceived by the user is gradually increased to that of the original 3D image. The transmittance of the OSD screen is also gradually increased. Accordingly, the OSD screen gradually becomes transparent, i.e., the OSD screen gradually disappears.

The bottom section of Fig. 8 conceptually illustrates a screen when the OSD image erasing processing shown in Fig. 7 has finished, i.e., when the transmittance **α** is 100 and the ratio x of the amount of parallax is 100.

In this state, the pop-out amount of the object is the same as that of the original 3D content. The OSD screen is completely transparent and is invisible to the user. In other words, the display image is the same as that before the OSD screen is displayed.

As described above, in the OSD screen display control processing, when displaying an OSD screen, the playback apparatus 1 performs control so that the OSD screen gradually appears by gradually decreasing the pop-out amount of a 3D image object and, at the same time, by gradually decreasing the transmittance of the OSD screen. Also, when erasing the OSD screen, the playback apparatus 1 performs control so that the OSD screen gradually becomes transparent by gradually increasing the pop-out amount of the 3D image object to the original amount and, at the same time, by gradually increasing the transmittance of the OSD screen. With this control processing, it is possible to prevent the OSD screen from being made partially invisible because of popping out of the 3D image in the forward direction.

When displaying or erasing an OSD screen, the pop-out amount of a 3D image object is gradually changed through the use of the ratio x of the amount of parallax, which makes it easier for a user to follow a change in the pop-out amount without making the user feel uncomfortable or feel that the display is unnatural.

In the above-described example, the playback apparatus 1 performs control so that the amount of parallax of a 3D image is changed only in the pop-out direction. Alternatively, the amount of parallax in the backward direction, as well as that in the pop-out direction, may be changed. For example, in accordance with a change in the amount of parallax in the pop-out direction, the amount of parallax in the backward direction may also be changed with a predetermined ratio (the same as the ratio x or half the ratio x). Alternatively, the amount of parallax of an overall 3D image may be changed in the following manner. An OSD screen may be displayed at a frontmost position, and an original 3D image object may be shifted in the backward direction without changing the depths in the forward direction and in the backward direction (indicated by the hatched portions in the bottom section of Fig. 8).

### 3D Image Display Control Processing While Trick Play Is Being Performed

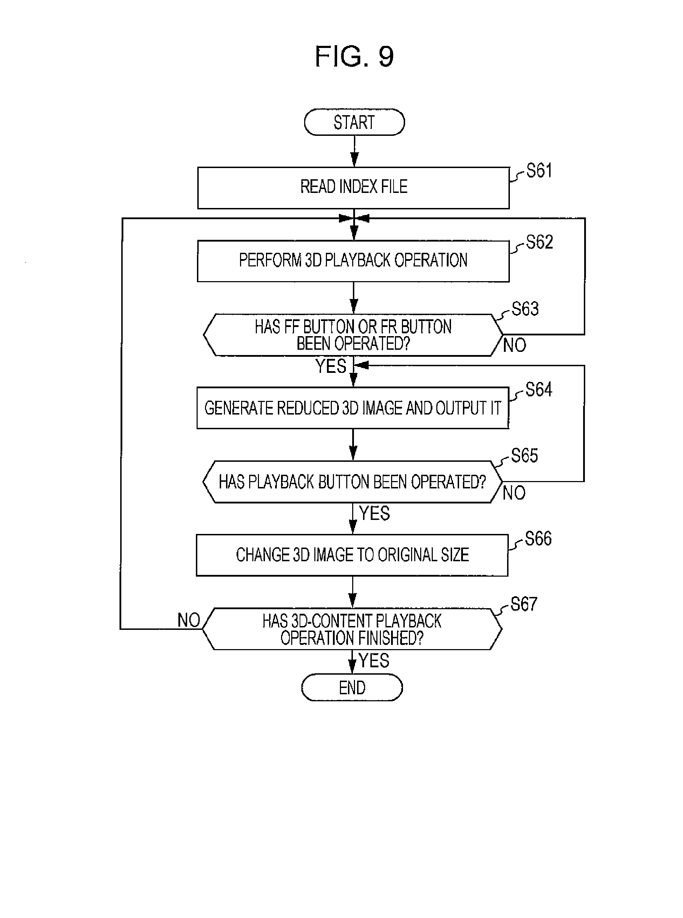

A description is now given below, with reference to the flowchart of Fig. 9, of 3D image display control processing performed by the playback apparatus 1 while a trick play operation is being performed. Trick play operations include fast-forward and fast-rewind operations using a FF button and an FR button, respectively. The display control processing is started, for example, when a BD-ROM, which is used as the optical disc 2, is set in the optical disc drive 11.

In step S61, the controller 27 of the playback apparatus 1 reads an index file recorded on the BD-ROM. In step S62, the playback apparatus 1 performs a 3D playback operation.

In step S63, the controller 27 determines whether the FF button or the FR button has been operated (depressed). If it is determined in step S63 that neither of the FF button nor the FR button has been operated, the process returns to step S62. Thus, the 3D playback operation continues until one of the FF button and the FR button is operated.

If it is determined in step S63 that one of the FF button and the FR button has been operated, the process proceeds to step S64. In step S64, the playback apparatus 1 reduces the size of original 3D images corresponding to a fast-forward or fast-rewind operation to a predetermined size so as to generate 3D images of a reduced size used for the fast-forward or fast-rewind operation. More specifically, the controller 27 instructs the image processor 24 to reduce the size of the original 3D images, and the image processor 24 reduces the size of the original 3D images.

In the fast-forward or fast-rewind operation, 3D images which are skipped between for every group of a predetermined number of images (at time intervals) are sequentially displayed on the display unit 3, and thus, there may be a large variation in the amounts of parallax set for the displayed 3D images, which may make a user feel uncomfortable. If the size of a 3D image is reduced, the amount of parallax of the 3D image is accordingly decreased. In this processing, therefore, while a fast-forward or fast-rewind operation is being performed, the size of the original 3D images is reduced and the 3D images are displayed with the reduced size. Then, the user does not have to feel uncomfortable, which would otherwise be caused by a large variation in the amounts of parallax of 3D images displayed on the display unit 3.

The amount by which 3D images are reduced may be set in an index file in advance. Alternatively, the playback apparatus 1 may determine the size of the 3D images by using a preset reduction ratio. Additionally, while a fast-forward or fast-rewind operation is being performed, instead of displaying 3D images constantly with a fixed size (reduction ratio), the original image size may be gradually reduced to a predetermined size (reduction ratio).

In step S65, the controller 27 determines whether the playback button has been operated. Steps S64 and S65 are repeated until it is determined that the playback button has been operated. That is, a fast-forward or fast-rewind operation using reduced 3D images continues until the playback button is operated.

If it is determined in step S65 that the playback button has been operated, the process proceeds to step S66. In step S66, the playback apparatus 1 changes the size of the reduced 3D images to the original size, and outputs the resulting images. That is, the controller 27 instructs the image processor 24 to stop reducing the size of the 3D images, and the image processor 24 outputs image data of the original 3D images stored in the video buffer 18.

If, in step S64, the size of the original 3D images is gradually reduced, in step S66, the image processor 24 gradually increases the size of the reduced 3D images to the original size.

In step S67, the controller 27 determines whether the playback operation of the 3D content has finished, i.e., whether all the items of 3D content have been read out from the BD-ROM. If the result of step S67 is no, the process returns to step S62, and the subsequent steps are repeated. If the result of step S67 is YES, the processing shown in Fig. 9 is completed.

As described above, if the FF button or the FR button is operated while 3D content is being played back, the playback apparatus 1 sequentially displays 3D images with a reduced size used for a fast-forward or fast-rewind operation. Thus, the user does not have to feel uncomfortable, which would otherwise be caused by a large variation in the amounts of parallax of 3D images displayed on the display unit 3. As a matter of fact, the amounts of parallax are not completely 0, and thus, it is still possible to give a three-dimensional appearance to 3D images and to check the 3D images by performing the fast-forward or fast-rewind operation without making the user feel uncomfortable.

The above-described series of processing operations may be executed by hardware or software. If software is used, a program forming that software is installed into a computer. In this case, the computer includes a computer built in dedicated hardware or a computer, for example, a general-purpose computer, that can execute various functions by installing various programs into that computer.

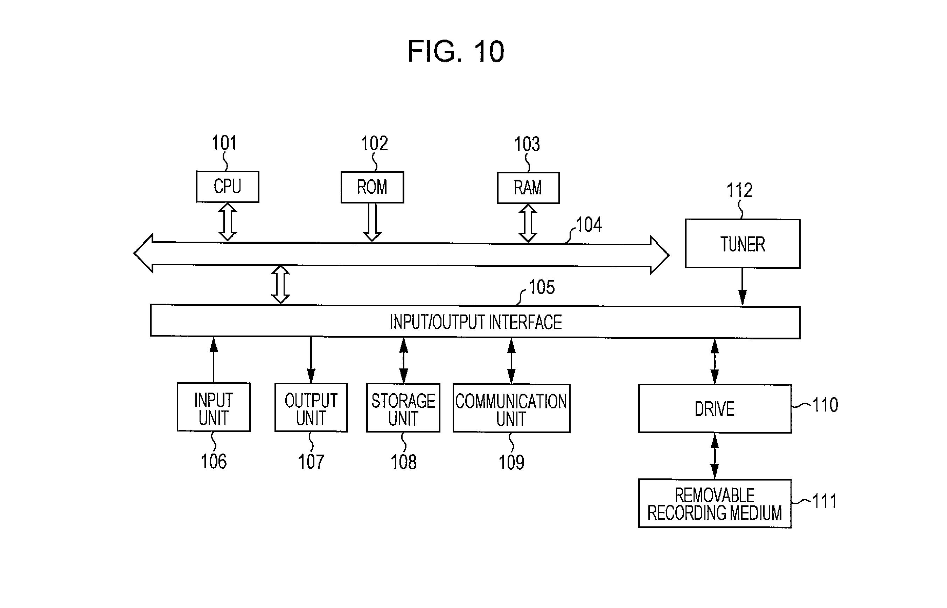

Fig. 10 is a block diagram illustrating an example of the hardware configuration of a computer that executes the above-described series of processing operations using a program.

In the computer, a central processing unit (CPU) 101, a read only memory (ROM) 102, and a random access memory (RAM) 103 are connected to each other via a bus 104.

An input/output interface 105 is connected to the bus 104. An input unit 106, an output unit 107, a storage unit 108, a communication unit 109, and a drive 110 are connected to the input/output interface 105.

The input unit 106 may include a keyboard, a mouse, and a microphone. The output unit 107 may include a display and a speaker. The storage unit 108 may be a hard disk or a non-volatile memory. The communication unit 109 may be a network interface. The drive 110 drives a removable recording medium 111, such as a magnetic disk, an optical disc, a magneto-optical disk, or a semiconductor memory.

A tuner 112 receives a broadcast wave signal in a predetermined frequency band corresponding to a predetermined broadcasting station, and supplies the broadcast wave signal to, for example, the CPU 101, via the input/output interface 105.

In the computer configured as described above, the CPU 101 executes a program stored in the storage unit 108 by loading the program into the RAM 103 via the input/output interface 105 and the bus 104, thereby performing the above-described series of processing operations.

The program executed by the computer (CPU 101) may be provided by being recorded on the removable recording medium 111, which serves as so-called package media. The program may be provided via a wired or wireless transmission medium, such as a local area network, the Internet, or digital satellite broadcasting.

In the computer, the removable recording medium 111 is set in the drive 110 so that the program is installed into the storage unit 108 via the input/output interface 105. The program may also be received by the communication unit 109 via a wired or wireless transmission medium and may be installed into the storage unit 108. Alternatively, the program may be installed in the ROM 102 or the storage unit 108 in advance.

The program executed by the computer may be a program that is executed in chronological order, as in the order discussed in this specification, or may be a program that is executed in parallel or that is executed at a predetermined time, for example, when it is called.

Embodiments of the present disclosure are not restricted to the above-described embodiment, but various modifications may be made without departing from the spirit of the disclosure.

The present disclosure contains subject matter related to that disclosed in Japanese Priority Patent Application JP 2010-161257 filed in the Japan Patent Office on July 16, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A playback apparatus comprising:
a playback unit configured to play back three-dimensional content recorded on a content recording medium;
an on-screen-display screen generator configured to generate an on-screen-display screen which is displayed by being superposed on a three-dimensional image of the three-dimensional content; and
an image processor configured to generate a three-dimensional image by changing an amount of parallax of the three-dimensional image of the three-dimensional content read from the content recording medium and to combine the generated three-dimensional image having the changed amount of parallax with the on-screen-display screen,
wherein, when the on-screen-display screen is to be displayed while the three-dimensional content is being played back, the image processor generates a three-dimensional image by gradually decreasing a pop-out amount of the three-dimensional image of the three-dimensional content read from the content recording medium and combines the generated three-dimensional image with the on-screen-display screen, and when the displayed on-screen-display screen is to be erased, the image processor generates a three-dimensional image by gradually increasing the decreased pop-out amount to the pop-out amount of the three-dimensional image of the three-dimensional content read from the content recording medium, and combines the generated three-dimensional image with the on-screen-display screen.

2. The playback apparatus according to Claim 1, wherein:
the image processor also changes a transmittance of the on-screen-display screen; and
when the on-screen-display screen is to be displayed while the three-dimensional content is being played back, the image processor combines the three-dimensional image generated by gradually decreasing the pop-out amount with an on-screen-display screen generated by gradually decreasing the transmittance, and when the displayed on-screen-display screen is to be erased, the image processor combines the three-dimensional image generated by gradually increasing the decreased pop-out amount to the pop-out amount of the three-dimensional image of the three-dimensional content read from the content recording medium with an on-screen-display screen generated by gradually increasing the transmittance.

3. The playback apparatus according to Claim 1,
wherein while performing a fast-forward or fast-rewind operation on the three-dimensional image, the image processor generates a reduced three-dimensional image by reducing the size of the three-dimensional image of the three-dimensional content read from the content recording medium to a predetermined image size, and the reduced three-dimensional image generated by the image processor and used for the fast-forward or fast-rewind operation is output to a display unit that displays three-dimensional images played back by the playback apparatus.

4. A playback method comprising:
when an on-screen-display screen is to be displayed by a playback apparatus for playing back three-dimensional content recorded on a content recording medium,
generating the on-screen-display screen by the use of an on-screen-display screen generator of the playback apparatus;
generating a three-dimensional image by gradually decreasing a pop-out amount of a three-dimensional image of the three-dimensional content read from the content recording medium and combining the generated three-dimensional image with the on-screen-display screen by the use of an image processor of the playback apparatus; and
when the on-screen-display screen is to be erased, generating a three-dimensional image by gradually increasing the decreased pop-out amount to the pop-out amount of the three-dimensional image of the three-dimensional content read from the content recording medium and combining the generated three-dimensional image with the on-screen-display screen.

5. A program that allows a computer to function as:
playback control means for controlling a playback operation for playing back three-dimensional content recorded on a content recording medium;
on-screen-display screen generating means for generating an on-screen-display screen that is displayed by being superposed on a three-dimensional image of the three-dimensional content; and
image processing means for generating a three-dimensional image by changing an amount of parallax of the three-dimensional image of the three-dimensional content read from the content recording medium and for combining the generated three-dimensional image with the on-screen-display screen,
wherein, when the on-screen-display screen is to be displayed while the three-dimensional content is being played back, the image processing means generates a three-dimensional image by gradually decreasing a pop-out amount of the three-dimensional image of the three-dimensional content read from the content recording medium and combines the generated three-dimensional image with the on-screen-display screen, and when the displayed on-screen-display screen is to be erased, the image processing means generates a three-dimensional image by gradually increasing the decreased pop-out amount to the pop-out amount of the three-dimensional image of the three-dimensional content read from the content recording medium, and combines the generated three-dimensional image with the on-screen-display screen.
